# EUROPÄISCHE PATENTANMELDUNG

(11) **EP 2 608 396 A1**
(43) Veröffentlichungstag der Anmeldung: **26.06.2013**
(21) Anmeldenummer: 11194190.2
(22) Anmeldetag: 19.12.2011
(51) Int. Cl.: H02M 7/5387, H02M 1/36

(54) **Verfahren zum Entladen wenigstens eines Zwischenkreiskondensators**

(71) Anmelder: Siemens Aktiengesellschaft, 80333 München (DE)
(72) Erfinder: Weis, Benno, 91334 Hemhofen (DE)

(57) **Zusammenfassung**

Die Erfindung betrifft ein Verfahren zum Entladen wenigstens eines Zwischenkreiskondensators (44) wenigstens eines Submoduls (22) einer Stromrichterschaltung (4), die wenigstens zwei Submodule (22) in Reihenschaltung, die über eine Induktivität elektrische Leistung aus einer eine Gleichspannung (16) abgebenden Leistungsquelle (8) bezieht aufweist, umfasst. Dabei weist jedes Submodul (22) eingangsseitig eine einphasige Halbbrücke (40) und lastseitig eine einphasige Vollbrücke (42) auf, wobei die Halbbrücke (40) und die Vollbrücke (42) gleichspannungsseitig sowie parallel hierzu ein Zwischenkreiskondensator (44) geschaltet sind. Das angegebene Verfahren umfasst die Schritte Verbinden der zu entladenden Zwischenkreiskondensators (44) mit der elektrischen Leistungsquelle (8) über die Halbbrücken (40) der Submodule (22), wenn die Summe (92) der Spannungen (72), die an den mit Leistungsquelle (8) zu verbindenden Zwischenkreiskondensatoren (44) abfällt, größer als eine Spannungsquelle ist und Entladen der verbundenen Zwischenkreiskondensatoren (44) über die elektrische Leistungsquelle (8), bis die Spannungen (70) an den Zwischenkreiskondensatoren (44) auf eine vorbestimmte Spannungsuntergrenze reduziert ist.

## Beschreibung

Die Erfindung betrifft ein Verfahren gemäß dem Oberbegriff des Anspruchs 1, eine Steuervorrichtung zur Durchführung des Verfahrens und eine Stromrichterschaltung mit der Steuervorrichtung.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al, "Modularer Hochfrequenz Umrichter für Fahrzeugantriebe", EMA 2010, 08. bis 09. September 2010, Aschaffenburg bekannt.

Dabei handelt es sich um eine Schaltung, die zum Umwandeln einer Gleichspannung aus einer elektrischen Leistungsquelle in mehrere Wechselspannungen vorgesehen ist. Die einzelnen Wechselspannungen werden durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegebenen werden kann. Die einphasige Vollbrücke umfasst zwei einphasige Halbbrücken, die jeweils zur Erzeugung einer Wechselspannungsphase vorgesehen sind, sodass die beiden Wechselspannungsphasen in der Summe eine einphasige Wechselspannung ergeben.

Die an den Eingängen der einzelnen Submodule abfallenden Teilspannungen werden vor der Wechselrichtung durch die Vollbrücke durch einen Hochsetzsteller erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke in jedem Submodul ist ein Zwischenkreiskondensator verschaltet, der elektrische Energie, beispielsweise aus einem Blindleistungsfluss von den Motorwicklungen, zwischenspeichern kann.

Es ist Aufgabe der Erfindung, die bekannte Stromrichterschaltung zu verbessern.

Die Aufgabe wird durch die Merkmale der unabhängigen Ansprüche gelöst. Bevorzugte Weiterbildungen sind Gegenstand der abhängigen Ansprüche.

Die Erfindung schlägt vor, die Zwischenkreiskondensatoren der Submodule über die elektrische Leistungsquelle zu entladen, wenn eine Gesamtspannung der zu entladenden Zwischenkreiskondensatoren eine bestimmte Spannungsquelle übersteigt.

Der Erfindung geht von der Überlegung aus, dass der Zwischenkreiskondensator über die Last oder über einen extra Entladewiderstand entladen werden könnte. Dabei wird die im Zwischenkreiskondensator gespeicherte elektrische Energie an der Last oder am Entladewiderstand in Wärme umgewandelt und somit vernichtet.

Zur Vermeidung der Vernichtung der elektrischen Energie, schlägt die Erfindung daher die bereits erwähnte Entladung des Zwischenkreiskondensatoren über die an das Submodul angeschlossene elektrische Leistungsquelle vor, so dass die elektrische Leistungsquelle durch den Zwischenkreiskondensator geladen wird und die im Zwischenkreiskondensator gespeicherte elektrische Energie nach der Entladung des Zwischenkreiskondensators wieder genutzt werden kann.

Die Erfindung gibt daher ein Verfahren zum Entladen wenigstens eines Zwischenkreiskondensators wenigstens eines Submoduls einer Stromrichterschaltung an, die wenigstens zwei Submodule in Reihenschaltung, die über eine Induktivität elektrische Leistung aus einer eine Gleichspannung abgebenden Leistungsquelle bezieht aufweist, umfasst. Dabei weist jedes Submodul eingangsseitig eine einphasige Halbbrücke und lastseitig eine einphasige Vollbrücke auf, und wobei die Halbbrücke und die Vollbrücke gleichspannungsseitig sowie parallel hierzu ein Zwischenkreiskondensator geschaltet sind. Das angegebene Verfahren umfasst die Schritte Verbinden der zu entladenden eines Zwischenkreiskondensators mit der elektrischen Leistungsquelle über die Halbbrücken der Submodule, wenn die Summe der Spannungen, die an den mit Leistungsquelle zu verbindenden Zwischenkreiskondensatoren abfällt, größer als eine Spannungsquelle ist und Entladen der verbundenen Zwischenkreiskondensatoren über die elektrische Leistungsquelle, bis die Spannungen an den Zwischenkreiskondensatoren auf eine vorbestimmte Spannungsuntergrenze reduziert ist.

Durch die Entladung der Zwischenkreiskondensatoren über die elektrische Energiequelle wird weniger elektrische Energie zum Betrieb der Stromrichterschaltung der eingangs genannten Art vernichtet, so dass der Wirkungsgrad der Stromrichterschaltung gesteigert wird.

In einer Weiterbildung der Erfindung umfasst das angegebene Verfahren den Schritt Aufladen der mit der elektrischen Leistungsquelle zu verbindenden Zwischenkreiskondensatoren des bestimmten Submoduls auf eine Mindestspannung, wenn die Summe der Spannungen, die an den mit Leistungsquelle zu verbindenden Zwischenkreiskondensatoren abfällt, nicht größer als die Spannungsquelle ist. Auf diese Weise kann eine Entladung der Zwischenkreiskondensatoren durch Rückspeisen ihrer gespeicherten elektrischen Energie in die elektrische Leistungsquelle selbst dann ermöglicht werden, wenn die Zwischenkreiskondensatoren zunächst nicht ausreichend elektrische Energie besitzen.

In einer zusätzlichen Weiterbildung der Erfindung bilden die Induktivität und die Halbbrücke in jedem Submodul einen Hochsetzsteller, wobei das Aufladen der mit der Leistungsquelle zu verbindenden Zwischenkreiskondensatoren des bestimmten Submoduls auf die Mindestspannung über den Hochsetzsteller des jeweiligen Submoduls erfolgt. Durch den Hochsetzsteller ist ein einfaches Stellglied geschaffen, den Zwischenkreiskondensator auf eine Kondensatorspannung aufzuladen, die über einer gewöhnlichen Betriebsspannung des Zwischenkreiskondensators liegt.

In einer anderen Weiterbildung der Erfindung ist die Spannungsquelle wenigstens größer als die von der elektrischen Leistungsquelle abgegebene Gleichspannung. Die Weiterbildung geht von der Überlegung aus, dass die elektrische Leistungsquelle an die Zwischenkreiskondensatoren eine Spannung anlegt, denen gegenüber die Zwischenkreiskondensatoren wie eine elektrische Last wirken. Die Zwischenkreiskondensatoren können an die elektrische Leistungsquelle nur elektrische Energie abgeben, wenn sie ihr gegenüber als Energiequelle wirken. Dazu müssen sie die an der elektrischen Energiequelle abfallende Spannung überwinden. Um dies umzusetzen schlägt die Weiterbildung vor, die Zwischenkreiskondensatoren auf wenigstens die von der elektrischen Leistungsquelle abgegebenen Gleichspannung aufzuladen.

In einer bevorzugten Weiterbildung der Erfindung ist die Spannungsquelle größer als die zweifache Gleichspannung. Die Weiterbildung geht von der Überlegung aus, dass sich während der Entladung des Zwischenkreiskondensators an der Induktivität eine Spannung aufbaut, die am größten ist, wenn die Spannung am Zwischenkreiskondensator genauso groß ist, wie die Spannung an der elektrischen Leistungsquelle. Danach baut sich diese Induktivitätsspannung wieder ab und entlädt währenddessen den Zwischenkreiskondensator weiter. Weist die Spannung am Zwischenkreiskondensator vor der Entladung den doppelten Wert der Spannung an der Leistungsquelle auf, dann beträgt die Zwischenkreiskondensatorspannung und die Induktivitätsspannung beim Beginn des Spannungsabbaus exakt die Spannung an der elektrischen Leistungsquelle, so dass durch den Spannungsabbau an der Induktivität der Zwischenkreiskondensator vollständig, also auf einen Wert unterhalb der Spannung an der Leistungsquelle, entladen werden kann.

In einer alternativen Weiterbildung der Erfindung weist die Halbbrücke jedes Submoduls ein parallel zu einem Eingang jedes Submoduls geschalteten ersten Schalter und einen in Reihe zwischen dem Eingang jedes Submoduls und dem Zwischenkreiskondensator jedes Submoduls geschalteten zweiten Schalter auf.

In einer zusätzlichen Weitebildung der Erfindung umfasst das angegebene Verfahren den Schritt Schließen des zweiten Schalters und Öffnen des ersten Schalters zum Verbinden des Zwischenkreiskondensators mit der elektrischen Leistungsquelle und Schließen des ersten Schalters in den Submodulen, dessen Zwischenkreiskondensatoren nicht mit der elektrischen Leistungsquelle verbunden werden sollen. Auf diese Weise kann die ohnehin vorhandene Eingangshalbbrücke dazu verwendet werden, selektiv die Submodule in den Entladekreis mit der elektrischen Leistungsquelle zu legen, die entladen werden sollen. Alle anderen Submodule können problemlos aus dem Entladekreis entfernt werden.

In einer noch anderen Weiterbildung der Erfindung umfasst das angegebene Verfahren den Schritt Unterbrechen eines Stromflusses durch die Induktivität nach dem Entladen der verbundenen Zwischenkreiskondensatoren. Die Weiterbildung geht von der Überlegung aus, dass die zu entladenden Zwischenkreiskondensatoren gemeinsam mit der Induktivität einen Schwingkreis bilden. Das heißt, dass nach dem vollständigen Spannungsabbau an der Induktivität der entladene Zwischenkreiskondensator beginnt, sich wider aufzuladen. Diese erneute Aufladung kann durch eine Unterbrechung des Stromflusses durch die Induktivität vermieden werden.

In einer alternativen Weiterbildung der Erfindung umfasst das angegebene Verfahren den Schritt Umwandeln einer in den verbundenen Zwischenkreiskondensatoren gespeicherten Energie in Wärme nach dem Entladen der verbundenen Zwischenkreiskondensatoren über die elektrische Leistungsquelle, wenn die Spannungsquelle kleiner als die zweifache Gleichspannung ist. Auf diese Weise kann eine Entladung der Zwischenkreiskondensatoren sichergestellt werden, auch wenn die Bedingungen zur Durchführung des angegebenen Verfahrens nicht erfüllt sind.

Besonders bevorzugt kann auch eine in den Zwischenkreiskondensatoren verbliebene elektrische Restenergie in Wärme umgewandelt werden, wenn an den Zwischenkreiskondensatoren nach dem Spannungsabbau an der Induktivität noch eine Restspannung verbleibt. So können die Zwischenkreiskondensatoren auch dann entladen werden, selbst wenn nicht die gesamte in den Zwischenkreiskondensatoren gespeicherte elektrische Energie an die elektrische Leistungsquelle abgegeben werden konnte.

Die Erfindung gibt auch eine Steuervorrichtung zur Durchführung eines angegebenen Verfahrens an

In einer Weiterbildung der Erfindung weist die Steuervorrichtung einen Speicher und einen Prozessor auf. Dabei ist das Verfahren in Form eines Computerprogramms in dem Speicher hinterlegt und der Prozessor zur Ausführung des angegebenen Verfahrens vorgesehen, wenn das Computerprogramm aus dem Speicher in den Prozessor geladen ist.

Die Erfindung gibt auch eine Stromrichterschaltung an, die wenigstens zwei Submodule in Reihenschaltung, die über eine Induktivität elektrische Leistung aus einer eine Gleichspannung abgebenden Leistungsquelle bezieht umfasst. Dabei weist jedes Submodul eingangsseitig eine einphasige Halbbrücke und lastseitig eine einphasige Vollbrücke aufweist. Ferner sind die Halbbrücke und die Vollbrücke gleichspannungsseitig sowie parallel hierzu ein Zwischenkreiskondensator geschaltet. Die angegebene Stromrichterschaltung umfasst in jedem Submodul eine angegebene Steuervorrichtung.

In einer Weiterbildung der Erfindung umfasst die angegebene Stromrichterschaltung eine antiseriell zur Leistungsquelle und in Reihe zur Induktivität geschaltete Diode. Die Diode führt den Schritt Unterbrechen eines Stromflusses durch die Induktivität nach dem Entladen der verbundenen Zwischenkreiskondensatoren automatisch durch und braucht nicht gesondert gesteuert zu werden.

In einer besonderen Weiterbildung umfasst die angegebene Stromrichterschaltung einen in Reihe zur Induktivität geschalteten Trennschalter, mit dem die Entladung der Zwischenkreiskondensatoren gesteuert werden kann.

Besonders günstig ist der Trennschalter dabei parallel zur Diode geschaltet, damit der Entladestart gesteuert werden kann, der Entladeschluss jedoch automatisch erfolgt.

Die Erfindung gibt auch einen Elektromotor an, der wenigstens einen ersten und zweiten Motorstrang zum Antreiben eines Rotors umfasst. Der angegebene Elektromotor umfasst eine angegebene Stromrichterschaltung, wobei das erste Submodul mit dem ersten Motorstrang und das zweite Submodul mit dem zweiten Motorstrang verbunden sind.

Die Erfindung gibt auch ein Fahrzeug an, das ein Rad und einen angegebenen Elektromotor zum Antrieb des Rades umfasst.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
- FIG 1: eine Schaltung mit einem beispielhaften modularen Umrichter,
- FIG 2: ein beispielhaftes Submodul des modularen Umrichters zeigen,
- FIG 3: eine Ersatzschaltbild der Schaltung aus FIG 1 während der Entladung der Zwischenkreiskondensatoren,
- FIG 4: ein Diagramm, dass den Spannungsverlauf der Kondensatorspannungen während der Entladung, und
- FIG 5: ein Diagramm, dass den Stromverlauf der Kondensatorspannungen während der Entladung zeigt.

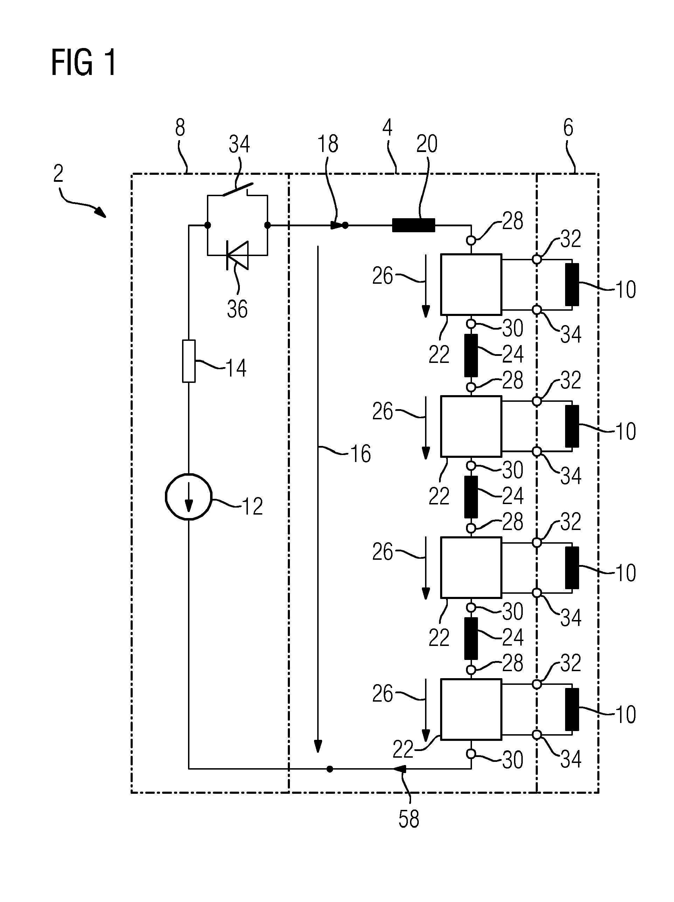

Es wird auf FIG 1 Bezug genommen, die eine Schaltung 2 mit einer beispielhaften Stromrichterschaltung 4 zeigt. Die Stromrichterschaltung 4 speist einen elektrischen Verbraucher 6 mit elektrischer Leistung aus einer elektrischen Leistungsquelle 8.

Der elektrische Verbraucher 6 ist in der vorliegenden Ausführung als Elektromotor eines Fahrzeuges ausgebildet und weist vier elektrische Lasten 10 auf, wobei jede elektrische Last 10 eine Motorwicklung des Elektromotors darstellt.

Die elektrische Leistungsquelle 8 ist in der vorliegenden Ausführung eine Batterie 8, die sich in eine Spannungsquelle 12 mit einem dazu in Reihe angeschlossenen Innenwiderstand 14 zerlegen lässt. Die Batterie 8 legt an die Stromrichterschaltung 4 eine Batteriespannung 16 an und gibt an die Stromrichterschaltung 4 einen Batteriestrom 18 ab.

Die Stromrichterschaltung 4 weist eingangsseitig eine Induktivität 20 auf, die beispielsweise eine Spule sein kann. An diese Induktivität 20 schließt sich in Reihe eine Reihenschaltung aus sechs noch zu beschreibenden Submodulen 22 an. An den einzelnen Submodulen 22 fällt jeweils eine Teilspannung 24 ab. Ferner ist an jedes Submodul 22 jeweils eine elektrische Last 10 angeschlossen. Basierend auf den Teilspannungen 24 versorgen die Submodule 22 auf diese Weise die Lasten 10 mit elektrischer Energie in einer noch zu beschreibenden Weise. Für die Anzahl der Submodule 22 und elektrischen Lasten 10 wurde in der vorliegenden Ausführung vier gewählt. Die Stromrichterschaltung 4 kann jedoch eine beliebig hohe Anzahl an Submodulen 22 besitzen und damit eine beliebig hohe Anzahl an elektrischen Lasten 10 speisen. Je mehr Submodule 22 jedoch in der Reihenschaltung verschaltet sind, desto kleiner werden die entsprechenden Teilspannungen 24.

Jedes Submodul 22 weist eine erste Eingangsklemme 26, eine zweite Eingangsklemme 28, eine erste Ausgangsklemme 30 und eine zweite Ausgangsklemme 32 auf. Während über den ersten und zweiten Eingangsklemmen 26, 28 jeweils die Teilspannungen 24 abfallen, sind an die ersten und zweiten Ausgangsklemmen 30, 32 die Lasten 10 angeschlossen.

Die Schaltung 2 besitzt ferner einen Trennschalter 34 und eine dazu antiparallel geschaltete Diode 36. Antiparallel heißt in diesem Zusammenhang, dass die Diode 36 in Richtung des Batteriestromes 18 sperrt. Auf den Trennschalter 34 ist im Normalbetrieb geschlossen. Auf seine Funktion und die der Diode 36 wird an späterer Stelle näher eingegangen.

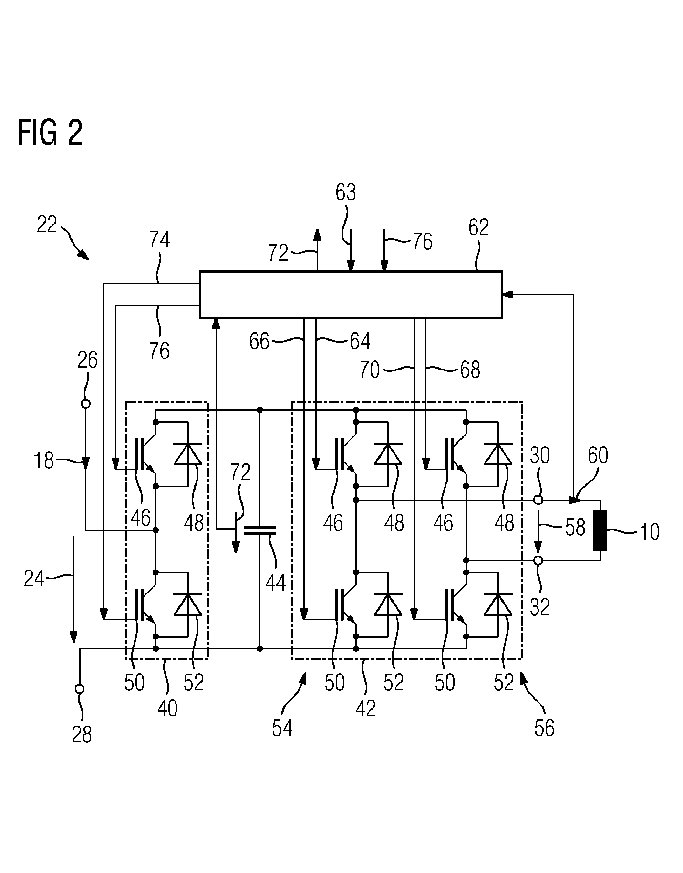

Es wird auf FIG 2 Bezug genommen, die beispielhaft den Aufbau eines der Submodule 22 in der Stromrichterschaltung 4 der FIG 1 zeigt. In FIG 2 werden zu FIG 1 gleiche Elemente mit gleichen Bezugszeichen versehen und nicht noch einmal beschrieben.

Das Submodul 22 weist eine Eingangshalbbrücke 40, eine Vollbrücke 42 und einen Zwischenkreiskondensator 44 auf, die miteinander parallel verschaltet sind.

Die Eingangshalbbrücke 40 weist einen ersten Schalter 46 und eine dazu parallel geschaltete erste Freilaufdiode 48 sowie einen dazu in Reihe geschalteten zweiten Schalter 50 und eine dazu antiparallel geschaltete zweite Freilaufdiode 52 auf. Während die erste Freilaufdiode 48 damit den Batteriestrom 18 durchlassen kann, kann die zweite Freilaufdiode 52 den Batteriestrom 18 blocken. Die Schalter 46, 50 können als Leistungshalbleiterschalter, wie beispielsweise MOSFETs (Metalloxid-Feldeffekttransistor) ausgebildet sein. Abhängig von der Art des Leistungshalbleiterschalters können die Freilaufdioden 48, 52 auch weggelassen werden.

Die erste Teilspannung 24 ist an den zweiten Schalter 50 angelegt, während der erste Schalter 46 in Reihe zwischen dem zweiten Schalter 50 und dem Wechselrichter 42 geschaltet ist. Somit kann der zweite Schalter 50 aus Sicht der Vollbrücke 42 den Eingang aus der Batterie 8 kurzschließen, während der erste Schalter 46 (bei geöffneten zweiten Schalter 50) die Vollbrücke 42 in den Strompfad der Batterie 8 legen kann. Werden in jedem Submodul 22 die Schalter 46, 50 in gleicher Weise abwechselnd geöffnet und geschlossen, ist gemeinsam mit der Induktivität 20 ein Hochsetzsteller geschaffen, der die Summe der Zwischenkreisspannungen 24 höher setzt, als die Batteriespannung 16. Weiterhin kann durch die Eingangshalbbrücke 40 die Vollbrücke 42 auch dauerhaft aus der Reihenschaltung der drei Submodule 22 entfernt werden, wenn der zweite Schalter 50 dauerhaft geschlossen bleibt.

Die Vollbrücke 42 realisiert einen Vierquadrantensteller, der eine erste Wechselrichterhalbbrücke 54 und eine zweite Wechselrichterhalbbrücke 56 aufweist. Beide Wechselrichterhalbbrücken 54, 56 sind analog zur Eingangshalbbrücke 40 aufgebaut. Die hochgesetzte Teilspannung 24, die über den Zwischenkreiskondensator 44 geglättet wird, kann durch eine geeignete Ansteuerung der Vollbrücke 42 in eine Wechselspannung 58 umgewandelt werden. Die Wechselspannung 58 wird an die elektrische Last 10 angelegt und ruft einen entsprechenden Wechselstrom 60 durch die elektrische Last 10 hervor. Gibt die elektrische Last 10 elektrische Energie an die als Vierquadrantensteller ausgeführte Vollbrücke 42 ab, so kann diese den entsprechenden Leistungsfluss zurück in das Submodul 22 leiten.

Zur Ansteuerung der Vollbrücke 42 ist im Submodul 22 ein lokales Steuergerät 62 vorgesehen. Das Steuergerät 62 empfängt von einem nicht dargestellten übergeordneten Steuergerät über eine nicht gezeigte sichere elektrische Trennung ein Stellsignal 63. Basierend auf dem Stellsignal 63 leitet das Steuergerät 62 ein erstes Ansteuersignal 64 für den ersten Schalter 46 der ersten Wechselrichterhalbbrücke 54, ein zweites Ansteuersignal 66 für den zweiten Schalter 50 der ersten Wechselrichterhalbbrücke 54, ein drittes Ansteuersignal 68 für den ersten Schalter 46 der zweiten Wechselrichterhalbbrücke 56 und ein viertes Ansteuersignal 70 für den zweiten Schalter 50 der zweiten Wechselrichterhalbbrücke 56 ab, so dass die Wechselrichterhalbbrücken 54, 56 den Batteriestrom 18 zerhacken und als Wechselstrom 60 durch die elektrische Last 10 so einstellen, das er bestimmten Vorgaben folgt, die dem Steuergerät 62 im Stellsignal 63 mitgeteilt werden. Die Erzeugung der Ansteuersignale 64 bis 70 kann dabei durch eine offene Steuerung oder basierend auf einer Messung des Wechselstromes 60 durch eine geschlossene Regelung erfolgen.

Die Steuergeräte 62 in den einzelnen Submodulen können ferner eine am Zwischenkreiskondensator 44 abfallende Spannung 72 erfassen und basierend auf der Zwischenkreiskondensatorspannung 72 die Entladung eines oder mehrerer Zwischenkreiskondensatoren 72 in der Stromrichterschaltung 4 einleiten. Zur Überwachung der Entladung der Zwischenkreiskondensatoren 44 kann jedes Steuergerät 62 die Zwischenkreiskondensatorspannung 44 auch an das übergeordnete Steuergerät senden.

Während der Entladung von Zwischenkreiskondensatoren 44 können die Steuergeräte 62 der Submodule 22, deren Zwischenkreiskondensatoren 44 nicht entladen werden sollen, mit einem fünften Ansteuersignal 74 den zweiten Schalter 50 im jeweiligen Submodul 22 dauerhaft schließen. Auf diese Weise wird der Eingang 26, 28 der Eingangshalbbrücke 40 dieser Submodule kurzgeschlossen und das entsprechende Submodul 22 so aus dem Leistungskreis der Stromrichterschaltung 4 entfernt, ohne, dass die restlichen, zu Submodule 22 mit den zu entladenden Zwischenkreiskondensatoren 44 davon betroffen wären. Zusätzlich kann das Steuergerät 62 durch ein sechst es Ansteuersignal 75 die ersten Schalter 46 der nicht zu entladenden Submodule 22 öffnen, damit ein interner Kurzschluss ihrer Zwischenkreiskondensatoren 44 vermieden wird.

Zum Entladen der Zwischenkreiskondensatoren 44 der Submodule 22, die zu entladen sind, laden die entsprechenden Steuergeräte 62 in den jeweiligen Submodulen 22 die Zwischenkreiskondensatoren 44 über die Eingangshalbbrücke 40, die gemeinsam mit der Induktivität 20 einen Hochsetzsteller bildet, auf eine Summenspannung auf, die mindestens das Doppelte der Batteriespannung 16 aufweist. Das heißt, dass die Zwischenkreiskondensatorspannung 72 aller zu entladenden Zwischenkreiskondensatoren 44 in der Summe mehr als das Doppelte der Batteriespannung 16 betragen muss.

Danach initiieren die Steuergeräte 62 beispielsweise basierend auf einem Snychronisationssignal 76 von dem übergeordneten Steuergerät die Entladung durch Schließen der ersten Schalter 46 und Öffnen der zweiten Schalter 50.

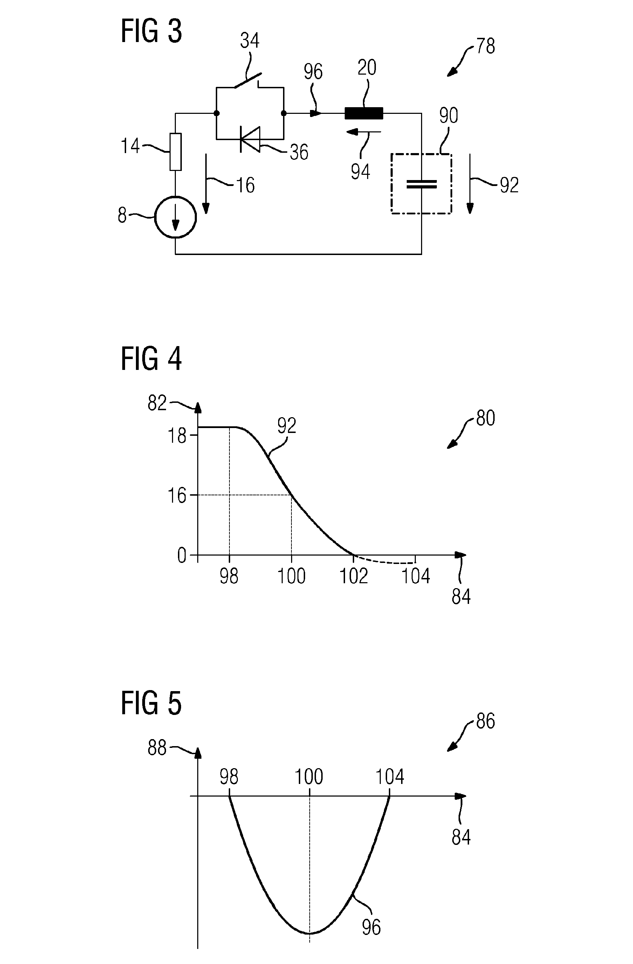

Es wird auf die FIG 3 bis 5 Bezug genommen. FIG 3 zeigt ein vereinfachtes Ersatzschaltbild 78, das die wirksamen Schaltungselemente der Schaltung 2 während eines Entladevorgangs zeigt. FIG 4 zeigt ein Diagramm 80, in dem eine Spannung 82 über die Zeit 84 aufgetragen ist, und FIG 5 zeigt ein Diagramm 86, in dem ein Strom 88 über die Zeit 84 aufgetragen ist. In den FIG 3 bis 5 werden zu FIG 1 und 2 gleiche Elemente mit gleichen Bezugszeichen versehen und nicht noch einmal beschrieben.

In FIG 3 wurden die zu entladenden und während des Entladevorgangs in Reihe geschalteten Zwischenkreiskondensatoren 44 zu einer Summenkapazität 90 zusammengefasst. An der Summenkapazität 90 fällt die Summenspannung 92 ab, die sich aus der Summe aller entsprechenden Zwischenkreiskondensatorspannungen 72 ergibt. An der Induktivität 20 fällt eine Induktivitätsspannung 94 ab, die sich im Wesentlichen aus der Differenz der Summenspannung 92 und der Batteriespannung 18 ergibt. Durch diese Induktivitätsspannung 94 wird durch die Induktivität 20 ein Entladestrom 96 hervorgerufen, der die einzelnen zur Summenkapazität 90 zusammengefassten Zwischenkreiskondensatoren 44 entlädt.

Der Verlauf der Summenspannung 92 ist in FIG 4 dargestellt, während der Verlauf er des Entladestroms 96 in FIG 5 dargestellt ist.

Vor Beginn der Entladung der Zwischenkreiskondensatoren 44 und sind die ersten Schalter 46 der Eingangshalbbrücken 40 der Submodule 22 mit den zu entladenden Zwischenkreiskondensatoren 44 geöffnet. Die Summenspannung 92 ist zu dieser Zeit zeitlich konstant und größer als die doppelte Batteriespannung 16. Werden die ersten Schalter 40 durch die entsprechenden Steuervorrichtungen 62 zu einem Startzeitpunkt 98 geöffnet, baut sich die Summenspannung 82 ab und ruft den Entladestrom 96 durch die Induktivität 20 hervor.

Der Entladestrom 96 erhöht sich, solange an der Induktivität eine positive Induktivitätsspannung 86 anliegt, solange also die Summenspannung 82 größer ist, als die Batteriespannung 16. Zu einem Gleichgewichtszeitpunkt 94, wenn die Summenspannung 82 unter die Batteriespannung 18 fällt und damit die Induktivitätsspannung 86 in der in FIG 3 gezeigten Richtung negativ wird, beginnt der Entladestrom 96 zu sinken und entlädt die Zwischenkreiskondensatoren 44 und damit die Summenkapazität 90 weiter, bis die Summenspannung 92 an der Summenkapazität 90 zu einem Entladezeitpunkt 102 auf Null abgesunken ist.

Ab dem Entladezeitpunkt 102 müsste sich an der Summenkapazität 92 eine in Zählrichtung gesehene negative Summenspannung 92 aufbauen, die in FIG 4 gestrichelt angedeutet ist. Die negative Aufladung der Zwischenkreiskondensatoren 44 wird nicht durch die Diode 36 oder den Schalter 34 verhindert, sondern durch die Freilaufdioden der Vierquadrantensteller der Submodule 22. Der Verlauf des Stromes 96 ändert dadurch seine Kurvenform hin zu kleineren Schwingfrequenzen, je nachdem wie viele Zwischenkreisspannungen bereits den Wert null erreicht haben. Ist die letzte Zwischenkreisspannung null geworden, ist der Stromverlauf bis zum Zeitpunkt 104 linear. Auf diese Weise kann noch der Entladestrom 96 bis zu einem Entladeendzeitpunkt 104 auf Null absinken und die Zwischenkreiskondensatoren vollständig entladen.

Der Trennschalter 34 kann geöffnet werden, sobald die Zwischenkreisspannungen auf einen Wert über der doppelten Zwischenkreisspannung aufgeladen sind, also bereits vor dem Zeitpunkt 98. Dieser Vorgang ist nicht zeitkritisch, was es auch ermöglicht, den Trennschalter 34 als mechanischen Schalter auszuführen.

Obwohl die Erfindung im Detail durch die bevorzugten Ausführungsbeispiele näher illustriert und beschrieben wurde, ist die Erfindung nicht durch diese Ausführungsbeispiele eingeschränkt. Andere Variationen können vom Fachmann hieraus abgeleitet werden, ohne den Schutzumfang der Erfindung zu verlassen.

## Patentansprüche

1. Verfahren zum Entladen wenigstens eines Zwischenkreiskondensators (44) wenigstens eines Submoduls (22) einer Stromrichterschaltung (4) umfassend wenigstens zwei Submodule (22) in Reihenschaltung, die über eine Induktivität elektrische Leistung aus einer eine Gleichspannung (16) abgebenden Leistungsquelle (8) bezieht aufweist, wobei jedes Submodul (22) eingangsseitig eine einphasige Halbbrücke (40) und lastseitig eine einphasige Vollbrücke (42) aufweist, und wobei die Halbbrücke (40) und die Vollbrücke (42) gleichspannungsseitig sowie parallel hierzu ein Zwischenkreiskondensator (44) geschaltet sind,
**gekennzeichnet durch**
- Verbinden der zu entladenden Zwischenkreiskondensators (44) mit der elektrischen Leistungsquelle (8) über die Halbbrücken (40) der Submodule (22), wenn die Summe (92) der Spannungen (72), die an den mit Leistungsquelle (8) zu verbindenden Zwischenkreiskondensatoren (44) abfällt, größer als eine Spannungsquelle ist; und
- Entladen der verbundenen Zwischenkreiskondensatoren (44) über die elektrische Leistungsquelle (8), bis die Spannungen (70) an den Zwischenkreiskondensatoren (44) auf eine vorbestimmte Spannungsuntergrenze reduziert ist.

2. Verfahren nach Anspruch 1, **gekennzeichnet durch**
- Aufladen der mit der Leistungsquelle (8) zu verbindenden Zwischenkreiskondensatoren (44) des bestimmten Submoduls (22) auf eine Mindestspannung, wenn die Summe (92) der Spannungen (70), die an den mit Leistungsquelle (8) zu verbindenden Zwischenkreiskondensatoren (44) abfällt, nicht größer als die Spannungsquelle (16) ist.

3. Verfahren nach Anspruch 2, **dadurch gekennzeichnet, dass** die Induktivität (20) und die Halbbrücke (40) in jedem Submodul (22) einen Hochsetzsteller bilden, wobei das Aufladen der mit der Leistungsquelle (8) zu verbindenden Zwischenkreiskondensatoren (44) des bestimmten Submoduls (22) auf die Mindestspannung über den Hochsetzsteller des jeweiligen Submoduls (22) erfolgt.

4. Verfahren nach einem der vorstehenden Ansprüche, **dadurch gekennzeichnet , dass** die Spannungsquelle wenigstens größer als die Gleichspannung (18) ist.

5. Verfahren nach einem der vorstehenden Ansprüche, **dadurch gekennzeichnet, dass** die Spannungsquelle größer als die zweifache Gleichspannung (18) ist.

6. Verfahren nach einem der vorstehenden Ansprüche, **dadurch gekennzeichnet , dass** die Halbbrücke (40) jedes Submoduls (22) ein parallel zu einem Eingang (26,28) jedes Submoduls (22) geschalteten ersten Schalter (50) und einen in Reihe zwischen dem Eingang (26,28) jedes Submoduls (22) und dem Zwischenkreiskondensator (44) jedes Submoduls (22) geschalteten zweiten Schalter (46) aufweist.

7. Verfahren nach Anspruch 6, **gekennzeichnet durch**
- Schließen des zweiten Schalters (46) und Öffnen des ersten Schalters (50) zum Verbinden des Zwischenkreiskondensators (44) mit der elektrischen Leistungsquelle (8); und
- Schließen des ersten Schalters (50) in den Submodulen (22), dessen Zwischenkreiskondensatoren (44) nicht mit der elektrischen Leistungsquelle (8) verbunden werden sollen.

8. Verfahren nach einem der vorstehenden Ansprüche, **gekennzeichnet durch**
- Unterbrechen eines Stromflusses **durch** die Induktivität (22) nach dem Entladen der verbundenen Zwischenkreiskondensatoren (44).

9. Verfahren nach einem der vorstehenden Ansprüche, **gekennzeichnet durch**
- Umwandeln einer in den verbundenen Zwischenkreiskondensatoren (44) gespeicherten Energie in Wärme nach dem Entladen der verbundenen Zwischenkreiskondensatoren (44) über die elektrische Leistungsquelle (8), wenn die Spannungsquelle kleiner als die zweifache Gleichspannung (18) ist

10. Steuervorrichtung (62) zur Durchführung eines Verfahrens nach einem der vorstehenden Ansprüche.

11. Stromrichterschaltung (4), umfassend wenigstens zwei Submodule (22) in Reihenschaltung, die über eine Induktivität (20) elektrische Leistung aus einer eine Gleichspannung (18) abgebenden Leistungsquelle (8) bezieht,
- wobei jedes Submodul (22) eingangsseitig eine einphasige Halbbrücke (40) und lastseitig eine einphasige Vollbrücke (42) aufweist, und
- wobei die Halbbrücke (40) und die Vollbrücke (42) gleichspannungsseitig sowie parallel hierzu ein Zwischenkreiskondensator (44) geschaltet sind,
**gekennzeichnet durch**
- eine Steuervorrichtung nach Anspruch 10.

12. Stromrichterschaltung (4) nach Anspruch 10, **gekennzeichnet durch** eine antiseriell zur Leistungsquelle (8) und in Reihe zur Induktivität (20) geschaltete Diode (36).

13. Stromrichterschaltung (4) nach Anspruch 8 oder 9, **gekennzeichnet durch** einen in Reihe zur Induktivität (20) geschalteten Trennschalter (34).

14. Elektromotor umfassend wenigstens einen ersten und zweiten Motorstrang zum Antreiben eines Rotors, **gekennzeichnet durch** eine Stromrichterschaltung (4) nach einem der Ansprüche 11 bis 13, wobei das erste Submodul (22) mit dem ersten Motorstrang und das zweite Submodul (22) mit dem zweiten Motorstrang verbunden ist.

15. Fahrzeug umfassend ein Rad und einen Elektromotor nach Anspruch 14 zum Antrieb des Rades.
